# EUROPÄISCHE PATENTSCHRIFT

(11) **EP 1 764 544 B1**
(45) Veröffentlichungstag und Bekanntmachung des Hinweises auf die Patenterteilung: **23.11.2011**
(21) Anmeldenummer: 06014058.9
(22) Anmeldetag: 06.07.2006
(51) Int. Cl.: F16N 7/12, F03D 11/00, F16H 57/04, F03D 7/02

(54) **Anstellwinkeleinstellvorrichtung für eine Windkraftanlage**
Pitchcontol device for a wind turbine
Dispositif pour régler l'angle d'attaque pour une éolienne

(30) Priorität: 16.09.2005 DE 202005014699 U
(43) Veröffentlichungstag der Anmeldung: 21.03.2007
(73) Patentinhaber: Baier & Köppel GmbH & Co., 91257 Pegnitz (DE)
(72) Erfinder: Kürzdörfer, Markus, 91257 Pegnitz (DE)
(74) Vertreter: Zech, Stefan Markus

(56) Entgegenhaltungen:
- WO-A-2004/101989
- DE-A1- 2 709 712
- DE-U1- 20 021 026
- DE-U1- 20 115 162
- DE-U1- 20 121 923
- US-A- 3 495 471
- BIESLER T: "Zentralschmieranlagen in Windkraftanlagen" INTERNET CITATION, [Online] Juni 2002 (2002-06), XP002299011 Gefunden im Internet: URL:http://www.erneuerbareenergien.de/0602 /wind.html> [gefunden am 2004-10-01]

## Beschreibung

Die Erfindung betrifft eine Pitcheinstellvorrichtung für eine Windkraftanlage umfassend eine mechanische Einrichtung zur Übertragung von Bewegungen wie im Oberbegriff des Anspruchs 1 definiert ist. Eine Pitcheinstellvorrichtung ist aus dem Dokument BIESLER T: "Zentralschmieranlagen in Windkraftanlagen", INTERNET CITATION, [Online] Juni 2002 (2002-06), XP002299011, Gefunden im Internet: URL:http://www.erneuerbareenergien.de/0602/wind.html[gefunden am 2004-10-01] bekannt.

Reibstellenbereiche von mechanischen Einrichtungen zur Übertragung von Bewegungen müssen i. A. in ausreichendem Maße mit Schmierstoff versorgt werden, um die Funktionsfähigkeit der mechanischen Einrichtungen zu gewährleisten. In vielen technischen Bereichen besteht ein großes Interesse daran, diese ausreichende Schmierstoffversorgung automatisch vornehmen zu können. Dies trifft im besonderen Maße für Windkraftanlagen, und dort insbesondere für deren Pitcheinstellvorrichtungen, zu, bei denen die zu schmierenden mechanischen Einrichtungen zur Übertragung von Bewegungen zum größten Teil für technisches Personal nur äußerst beschwerlich zugänglich sind und bei denen Ausfallzeiten aufgrund mangelnder Schmierung vor dem Hintergrund der wirtschaftlichen Amortisation der Windkraftanlagen mit ihren hohen Anschaffungs- und Errichtungskosten möglichst vermieden werden müssen.

Aus DE 201 21 923 U1 ist ein Zahnradabschmiermodul zur automatischen Schmierung von Zahnrädern, insbesondere eines Windkraftwerkes, bekannt, wobei das Zahnradabschmiermodul ein Zahnkranzmodul, das um eine feststehende Achse angeordnet ist, mit mehreren Zähnen umfasst. Die feststehende Achse für die Führung des Schmierstoffs weist dabei eine zum Zahnkranzmodul führende Achsenbohrung mit einem Austrittsloch auf. Weiterhin besitzt jeder Zahn des Zahnkranzmoduls vor Kopf eine Durchbohrung, die mit dem Austrittsloch der Achsenbohrung in Übereinstimmung bringbar ist.

Außerdem besteht das Zahnkranzmodul aus einem festen Kunststoffkern mit einer den Schmierstoff gleichmäßig abgebenden Beschichtung.

Bei dem aus DE 201 21 923 U1 bekannten Zahnradabschmiermodul kann der Schmierstoff durch das oben genannte Austrittsloch der Achsenbohrung hindurch zu einem Zahn des Zahnkranzmoduls gefördert werden, wenn das Austrittsloch der Achsenbohrung mit der oben genannten Durchbohrung des Zahns zumindest teilweise in Übereinstimmung gebracht worden ist. Wenn hingegen sich das Zahnkranzmodul in einer Stellung befindet, in der keine Durchbohrung eines Zahns des Zahnkranzmoduls eine zumindest teilweise Übereinstimmung mit dem Austrittsloch der Achsenbohrung aufweist, kann kein Schmierstoff durch das oben genannte Austrittsloch der Achsenbohrung hindurch zu einem Zahn des Zahnkranzmoduls gefördert werden.

Liegt eine solche Stellung des Zahnkranzmoduls für einen längeren Zeitraum hindurch vor, ist daher über diesen gesamten Zeitraum keine Schmierung der Zahnräder mittels dem aus DE 201 21 923 U1 bekannten Zahnradabschmiermodul möglich. Vor allem bei Zahnradgetrieben innerhalb von Windkraftanlagen, und dort insbesondere - wie weiter unten erläutert werden wird - bei Pitcheinstellvorrichtungen für die Flügel der Windkraftanlagen, ist es aber so, dass sich ein Zahnradgetriebe innerhalb einer Windkraftanlage über eine langen Zeitraum hindurch in Stellungen befindet, in der sich die Winkelpositionen der Zahnräder relativ zueinander - wenn überhaupt - nur um wenige Winkelgrade verändern. Vorausgesetzt, dass ein aus DE 201 21 923 U1 bekanntes Zahnradabschmiermodul zur automatischen Schmierung eines Zahnradgetriebes einer Pitcheinstellvorrichtung einer Windkraftanlage verwendet wird, und dass sich das Zahnradgetriebe über einen langen Zeitraum in Stellungen befindet, in denen keine Durchbohrung eines Zahns des Zahnkranzmoduls eine zumindest teilweise Übereinstimmung mit dem Austrittsloch der Achsenbohrung aufweist, kann das gesamte Zahnradgetriebe, und dabei insbesondere der Reibstellenbereich des Zahnradgetriebes, mittels des aus DE 201 21 923 U1 bekannten Zahnradabschmiermoduls nicht mit Schmierstoff versorgt werden, wodurch es zu Fehlfunktionen, Ausfällen oder Defekten bis hin zu kapitalen Schäden kommen kann.

Da bei dem aus DE 201 21 923 U1 bekannten Zahnradabschmiermodul das Zahnkranzmodul aus einem festen Kunststoffkern besteht, ist außerdem davon auszugehen, dass ein solches Zahnkranzmodul, insbesondere im Falle eines Eingreifens des Zahnkranzmoduls in ein metallisches Übertragungsglied, einen im Vergleich zu entsprechenden metallischen Elementen, die zudem noch eine Oberflächenvergütung aufweisen könnten, höheren Verschleiß aufweist.

Heutige Windkraftanlagen lassen sich hinsichtlich der Fixierung der Flügel bzw. Rotorblätter in Bezug zur Rotornabe in drei Kategorien einteilen:
- Stallgeregelte Windkraftanlagen: Bei ihnen sind die Flügel mit einem fix eingestellten Winkel an die Rotornabe angeschraubt. Wenn sich die Windgeschwindigkeit erhöht, steigt der Anströmwinkel auf den Flügel. Das geht solange, bis ein - vorgesehener - Strömungsabriss eintritt.
- Windkraftanlagen mit Pitch-Regelung: Bei ihnen wird ständig die Leistungsabgabe der Anlage gemessen. Wenn diese zu hoch ist, werden die Flügel leicht aus dem Wind gedreht. Umgekehrt werden die Flügel in den Wind gedreht, wenn der Wind wieder nachlässt. Die Flügel müssen also um ihre Längsachse gedreht werden können.
- Windkraftanlagen mit aktiver Stallregelung: Technisch gesehen erinnert die aktive Stallregelung wegen der drehbaren Flügel an die Pitch-Regelung. Um bei geringen Windgeschwindigkeiten ein einigermaßen hohes Drehmoment zu erzeugen, wird eine solche Windkraftanlage die Flügel wie eine Windkraftanlage mit Pitch-Regelung verdrehen. Sobald die Windkraftanlage ihre Nennleistung erreicht hat, werden die Flügel um den Generator vor Überlast zu schützen in die entgegengesetzte Richtung wie bei einer Windkraftanlage mit Pitch-Regelung gedreht. Das bedeutet, dass der Anstellwinkel der Flügel erhöht wird, um einen stärkeren Strömungsabriss zu erzeugen und damit die überschüssige Energie im Wind abzuweisen. Die Flügel müssen also um ihre Längsachse gedreht werden können.

Also weisen Windkraftanlagen mit Pitch-Regelung und Windkraftanlagen mit aktiver Stallregelung mechanische Einrichtungen auf, um ihre Flügel um ihre Längsachse drehen zu können. Dabei ist die Drehung der Flügel um ihre Längsachse zum einen so realisiert, dass die Flügel einer einzelnen Windkraftanlage jeweils einzeln über autarke Systeme, oder zum anderen, dass die Flügel einer einzelnen Windkraftanlage zusammen über ein einziges System verstellt werden.

Die Pitchwinkel, d. h. die Winkel, um die die Flügel einer Windkraftanlage um ihre Längsachse gedreht werden, liegen dabei sowohl für die Optimierung des Leistungsbeiwertes der Windkraftanlage als auch für die Minimierung der Geräuschemission der Windkraftanlage lediglich im Bereich von +/- 2° (Quellen: Dr.-Ing. Fred Prillwitz, Dipl.-Ing. A. Holst, Prof. Dr.-Ing. Harald Weber, Unterstützung der Primärregelung durch Windkraftanlagen, Veröffentlichung zum 11. Symposium Maritime Elektrotechnik, 03. - 04.06.2004, Rostock; Helmut Klug, Joachim Gabriel, Geräuschminderung bei Windenergieanlagen durch Modifikation der Blattspitze, der Blatthinterkante und des Anstellwinkels, DEWI Magazin Nr. 11, August 1997).

Üblicherweise wird die Pitcheinstellung eines Flügels bzw. der Flügel einer Windkraftanlage mittels eines Zahnradgetriebes, bei dem insbesondere ein Zahnrad, insbesondere ein Antriebszahnrad, in ein Hohlrad oder Hohlradmodul mit Innenverzahnung, als insbesondere Abtriebsglied, eingreift, vorgenommen. Da - wie oben erläutert - beim Betrieb der Windkraftanlage der Pitchwinkel meist nur um wenige Zehntel-Winkelgrad verändert wird, werden die beweglichen Glieder des zugehörigen Zahnradgetriebes relativ zueinander in der Art bewegt, dass (bzgl. der Betriebsdauer der Windkraftanlage fast ausschließlich) nur jeweils geringe Anteile der beweglichen Glieder zeitweilig zum Reibstellenbereich des Zahnradgetriebes gelangen. Vor allem für eine ausreichende Schmierung dieser genannten geringen Anteile der beweglichen Glieder muss daher gesorgt werden, um geringen Verschleiß und ordnungsgemäßen Betrieb der Windkraftanlage zu gewährleisten, während für die übrigen Anteile der beweglichen Glieder keine Schmierung während des Betriebs der Windkraftanlage erforderlich sein muss.

Dies gilt umso so mehr, da bei Betrieb der Windkraftanlage zumindest zeitweilig aufgrund der Windanregung die Flügel der Windkraftanlage Hin- und Herbewegungen oder Schwingungsbewegungen ausführen. Diese Bewegungen bzw. Anteile dieser Bewegungen der Flügel aufgrund der Windanregung wirken auf die beweglichen Glieder der Pitcheinstellvorrichtung der Windkraftanlage in der Weise zurück, dass deren bewegliche Glieder ständig Hin- und Herbewegungen mit sehr geringen Amplituden ausführen, wobei diese Hin- und Herbewegungen anschaulich als Zitterbewegungen oder kleine Schwingungen der beweglichen Glieder beschrieben werden können.

Die Aufgabe der vorliegenden Erfindung besteht daher darin, eine Pitcheinstellvorrichtung für eine Windkraftanlage anzugeben, bei der die mechanische Einrichtung zur Übertragung von Bewegungen auf einfache, zuverlässige und effiziente Weise geschmiert wird.

Diese Aufgabe wird mit einer Pitcheinstellvorrichtung für eine Windkraftanlage, die eine mechanische Einrichtung zur Übertragung von Bewegungen und eine Schmiervorrichtung zur automatischen Schmierung zumindest eines Bereiches der mechanischen Einrichtung umfasst, nach den Merkmalen des Schutzanspruchs 1 gelöst. Vorteilhafte Weiterbildungen sind in den Unteransprüchen angegeben.

Der hier vorgeschlagenen Lösung liegt die Überlegung zugrunde, dass bei Betrieb der Pitcheinstellvorrichtung bezogen auf die gesamte Betriebsdauer der Windkraftanlage während mindestens 95% der gesamten Betriebsdauer der Windkraftanlage nur jeweils ein Anteil zumindest eines Übertragungsgliedes der mechanischen Einrichtung der Pitcheinstellvorrichtung zeitweilig zum zumindest einen Reibstellenbereich gelangt, wohingegen jeweils der übrige Anteil des zumindest einen Übertragungsgliedes der mechanischen Einrichtung der Pitcheinstellvorrichtung nicht zum zumindest einen Reibstellenbereich gelangt.

Die mechanische Einrichtung umfasst dabei zumindest zwei Übertragungsglieder, die sich bei der Übertragung von Bewegungen relativ zueinander bewegen. Diese zumindest zwei Übertragungsglieder sind an der mechanischen Einrichtung gelagert, wodurch durch diese Lagerung ein gemeinsames Bezugssystem definiert wird. Weiterhin sind die Bewegungsmöglichkeiten der zumindest zwei Übertragungsglieder relativ zueinander durch die Ausgestaltung der mechanischen Einrichtung bestimmt. Durch den jeweiligen Eingriff der bei der Übertragung von Bewegungen relativ zueinander bewegten Übertragungsglieder der mechanischen Einrichtung wird der genannte Reibstellenbereich zwischen den zumindest zwei Übertragungsglieder definiert.

In einer vorteilhaften Ausgestaltung ist die Anordnung zwischen den Übertragungsgliedern so getroffen, dass der zumindest eine Reibstellenbereich im Wesentlichen ortsfest bezüglich des gemeinsamen Bezugssystems definiert ist.

In bevorzugten Ausgestaltungen der erfindungsgemäßen Pitcheinstellvorrichtung umfasst diese eine mechanische Einrichtung zur Übertragung von Bewegungen, bei der zumindest eines der zumindest zwei Übertragungsglieder eine Schnecke oder ein Schneckenrad ist oder bei der zumindest zwei der zumindest zwei Übertragungsglieder ein Stirnschraubradpaar oder ein Schneckenradsatz sind.

Nach einem ebenfalls vorteilhaften Aspekt der vorliegenden Erfindung umfasst die erfindungsgemäße Pitcheinstellvorrichtung eine mechanische Einrichtung zur Übertragung von Bewegungen, bei der zumindest eines der zumindest zwei Übertragungsglieder eine Zahnstange oder ein Zahnrad, insbesondere ein Stirnrad oder ein Kegelrad, ist, wobei bevorzugtermaßen jeweils die Zahnstange, das Stirnrad oder das Kegelrad eine Gerad- oder Schrägverzahnung oder Doppelschräg- bzw. Pfeilverzahnung oder Bogenverzahnung aufweist.

Nach einem weiteren vorteilhaften Aspekt der vorliegenden Erfindung sind bei der mechanischen Einrichtung zur Übertragung von Bewegungen, die von der erfindungsgemäßen Pitcheinstellvorrichtung umfasst wird, zumindest zwei der zumindest zwei Übertragungsglieder Zahnräder, insbesondere Stirnräder oder Kegelräder bevorzugtermaßen mit Geradverzahnung oder Schrägverzahnung oder Doppelschrägverzahnung bzw. Pfeilverzahnung oder Bogenverzahnung.

Weiterhin ist es besonders vorteilhaft, wenn zumindest eines der zumindest zwei Übertragungsglieder der mechanischen Einrichtung zur Übertragung von Bewegungen, wobei nach einer bzw. einem der oben genannten vorteilhaften Ausgestaltungen bzw. Aspekte zumindest eines der zumindest zwei Übertragungsglieder eine Schnecke, ein Schneckenrad, ein Element eines Stirnschraub- oder eines Schneckenradsatzes oder ein Zahnrad ist, ein Hohlrad oder Hohlradmodul bevorzugtermaßen mit Außenverzahnung oder Innenverzahnung ist.

Der in der Beschreibung und in den Ansprüchen der vorliegenden Erfindung verwendete Begriff Schmierstoff umfasst sowohl einen Schmierstoff an sich als auch ein Stoffgemisch, das zumindest einen Schmierstoff aufweist.

In einer weiteren bevorzugten Ausgestaltung der erfindungsgemäßen Pitcheinstellvorrichtung enthält der Schmierstoff, mit dem die mechanische Einrichtung zur Übertragung von Bewegungen über die Schmiervorrichtung automatisch geschmiert wird, feste Bestandteile und/oder zumindest ein Trennmittel und/oder ein biologisch abbaubares Trägermittel und/oder zumindest ein thixotropes Medium.

Ferner ist es vorteilhaft, wenn die Schmiervorrichtung der erfindungsgemä-βen Pitcheinstellvorrichtung eine Einrichtung zur Beigemengung von Luft zum Schmierstoff vor dem Sprühen umfasst.

In einer weiteren bevorzugten Ausgestaltung der erfindungsgemäßen Pitcheinstellvorrichtung ist bzw. sind die Sprühleistung und/oder die Dichten der Sprühpulse und/oder die Dauern der Sprühpulse der Schmiervorrichtung ausreichend groß ausgelegt, damit der zumindest eine räumliche Abschnitt des zumindest einen Reibstellenbereichs, der über die Düsen mit Schmierstoff besprüht wird, mit einem durchgehenden Schmierfilm besprüht wird bzw. besprüht werden kann.

Nach weiteren vorteilhaften Aspekten der vorliegenden Erfindung ist bzw. sind für den Fall, dass der Schmierstoff in Form von Sprühpulsen auf den zumindest einen Reibstellenbereich gesprüht wird, die Dichte bzw. die Dichten und/oder die Dauer bzw. die Dauern zumindest einzelner Sprühpulse und/oder zumindest einzelner Zeitspannen, die zwischen aufeinanderfolgenden Sprühpulsen liegen, einstellbar.

In weiteren vorteilhaften Ausgestaltungen der erfindungsgemäßen Pitcheinstellvorrichtung wird bzw. werden die Sprühleistung und/oder die Dichte der Sprühpulse und/oder die Dauern der Sprühpulse der Schmiervorrichtung abhängig zum einen entweder von der Anzahl der Durchgänge oder von der Anzahl der Durchgänge pro Zeiteinheit zumindest einer definierten Stelle zumindest eines der zumindest zwei Übertragungsglieder vorbei an einer definierten Stelle des gemeinsamen Bezugssystems der mechanischen Einrichtung oder zum anderen von der Gesamtwegstrecke, die zumindest eine definierte Stelle zumindest eines der zumindest zwei Übertragungsglieder in Bezug auf eine definierte Stelle des gemeinsamen Bezugssystems der mechanischen Einrichtung zurückgelegt, eingestellt.

Vorteilhafterweise besteht zusätzlich bei der erfindungsgemäßen Pitcheinstellvorrichtung für die Schmiervorrichtung eine Tasterauslösung für das Sprühen des Schmierstoffs auf den zumindest einen Reibstellenbereich der automatisch zu schmierenden mechanischen Einrichtung zur Übertragung von Bewegungen.

In einer weiteren bevorzugten Ausgestaltung der erfindungsgemäßen Pitcheinstellvorrichtung sind die Düsen der Schmiervorrichtung um zumindest einen Winkelbereich bzgl. des gemeinsamen Bezugssystems verschwenkbar, wobei bevorzugtermaßen der zumindest eine Winkelbereich, um den die Düsen bzgl. des gemeinsamen Bezugssystems verschwenkbar sind, einstellbar ist und/oder die Düsen zeitlich in vorgegebenen oder einstellbaren zeitlichen Perioden oder impulsgesteuert verschwenkt werden oder verschwenkt werden können.

Weiterhin ist besonders bevorzugt, dass die mechanische Einrichtung der erfindungsgemäßen Pitcheinstellvorrichtung ein Hohlrad oder Hohlradmodul mit Innenverzahnung und ein Zahnrad, insbesondere ein Antriebszahnrad, das in das Hohlrad oder Hohlradmodul mit Innenverzahnung, als insbesondere Abtriebsglied, eingreift, umfasst.

Bevorzugtermaßen wird der Schmierstoff bei der erfindungsgemäßen Pitcheinstellvorrichtung unter Verwendung von Druckluft an die Düsen angefördert.

Ein vorteilhafter Aspekt der vorliegenden Erfindung ist, dass bei der erfindungsgemäßen Pitcheinstellvorrichtung der Düsen Druckluft zugeführt wird, so dass der Schmierstoff in zumindest einem Druckluftstrahl aus den Düsen gesprüht wird, wobei es bevorzugt ist, wenn der Schmierstoff durch die Druckluft mitgerissen wird.

In bevorzugten Ausgestaltungen der erfindungsgemäßen Pitcheinstellvorrichtung wird alternativ mittels der Pitcheinstellvorrichtung jeweils der Pitchwinkel aller Flügel der Windkraftanlage eingestellt, wobei vorteilhafterweise der zugehörigen Schmiervorrichtung eine Druckluftquelle zugeordnet ist, oder mittels der Pitcheinstellvorrichtung unter der Voraussetzung, dass die Windkraftanlage mehr als einen Flügel umfasst, der Pitchwinkel genau eines Flügels der Windkraftanlage eingestellt, wobei vorteilhafterweise der zugehörigen Schmiervorrichtung genau eine Druckluftquelle zugeordnet ist.

Weiterhin ist es besonders vorteilhaft, wenn bei der erfindungsgemäßen Pitcheinstellvorrichtung für den Fall, dass die erste der unmittelbar vorher genannten Alternativen vorliegt, der Schmiervorrichtung eine Pumpe zur Förderung des Schmierstoffs zugeordnet ist, wobei die Pumpe Schmierstoff an Düsen liefert, die unterschiedlichen Flügeln zugeordnet ist, oder für den Fall, dass die zweite der unmittelbar vorher genannten Alternativen vorliegt, der einem Flügel zugeordneten Schmiervorrichtung genau eine Pumpe zur Förderung des Schmierstoffs zugeordnet ist. Dabei wird bzw. werden in weiteren bevorzugten Ausgestaltungen der erfindungsgemäßen Pitcheinstellvorrichtung die genannte Pumpe oder die genannten Pumpen mit Druckluft versorgt, wobei es vorteilhaft ist, wenn die bzw. eine Pumpe zumindest einen Druckluftanschluss aufweist und/oder wenn die bzw. eine Pumpe mittels Druckluft gesteuert wird.

Die Erfindung wird im Folgenden auch hinsichtlich weiterer Merkmale und Vorteile anhand eines Ausführungsbeispiels weitergehend erläutert. Dabei wird auch auf die beiliegende Zeichnung Bezug genommen, in der schematisch dargestellt ist:

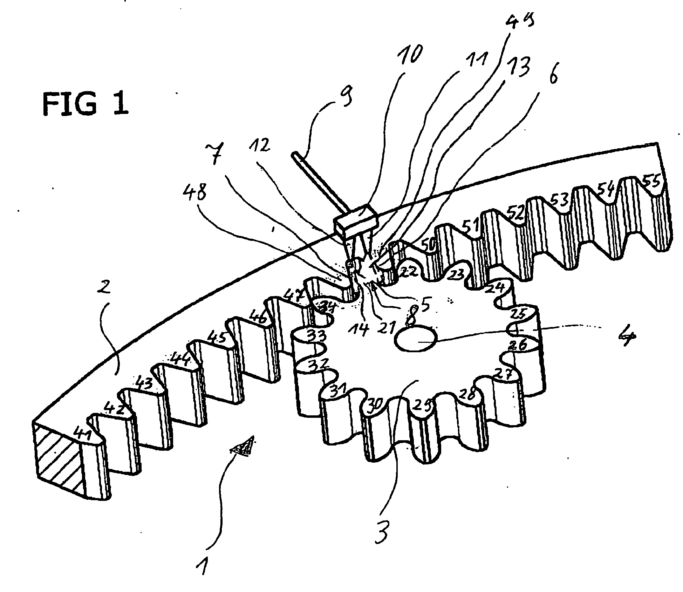

- FIG 1: eine perspektivische Draufsicht auf eine Ausführungsform einer erfindungsgemäßen Pitcheinstellvorrichtung für eine Windkraftanlage.

In FIG 1 ist eine Ausführungsform einer erfindungsgemäßen Pitcheinstellvorrichtung für eine Windkraftanlage dargestellt, die eine mechanische Einrichtung 1 zur Übertragung von Bewegungen und eine Schmiervorrichtung zur automatischen Schmierung zumindest eines Bereiches der mechanischen Einrichtung 1 umfasst.

Die mechanische Einrichtung 1 umfasst ein geradverzahntes Abtriebshohlrad 2 (als Ausschnitt dargestellt) mit Innenverzahnung und ein geradverzahntes Antriebsstirnrad 3, das in das Abtriebshohlrad 2 eingreift. Das Antriebsstirnrad 3 ist mittels der Lagerung 4 gelagert.

Das Antriebsstirnrad 3 weist Zähne 21 bis 34, und das Abtriebshohlrad 2 Zähne 41 bis 55 auf. Die mechanische Einrichtung 1 befindet sich in einer Stellung, in der der Zahn 21 des Antriebsstirnrades 3 zwischen die beiden Zähne 48 und 49 des Abtriebshohlrades 2 eingreift. Dabei liegen zum einen eine erste Antriebsstirnradflanke 5 an einer ersten Abtriebshohlradflanke 6 an und zum anderen eine zweite Antriebsstirnradflanke (in FIG 1 verdeckt durch zweite Abtriebshohlradflanke 7) an einer zweiten Abtriebshohlradflanke 7 an. Daher werden ein erster 8 und ein zweiter (in FIG 1 verdeckt durch die zweite Abtriebshohlradflanke 7) Reibstellenbereich definiert.

Durch diese dargestellte Stellung von Antriebsstirnrad 3 und Abtriebshohlrad 2 ist der Pitchwinkel der Windkraftanlage auf denjenigen Wert eingestellt, der dem statistischen Mittelwert des Pitchwinkels der Windkraftanlage im Betriebszustand entspricht. Wie eingangs erläutert worden ist, wird der Pitchwinkel lediglich im Bereich von +/- 2° im Betriebszustand der Windkraftanlage verändert. Auch bei Veränderung des Pitchwinkels um +2° bzw. - 2° liegt nach wie vor noch eine kraftschlüssige Verbindung des Zahns 21 des Antriebsstirnrades 3 mit beiden Zähnen 48 und 49 des Abtriebshohlrades 2 vor. Dagegen kommt es während dieser genannten Veränderung des Pitchwinkels nicht zu einer kraftschlüssigen Verbindung eines der übrigen Zähne 21 bis 34 des Antriebsstirnrades 3 mit einem dem übrigen Zähne 41 bis 55 des Abtriebshohlrades 2.

Durch eine Zuleitung 9 der in FIG 1 dargestellten Ausführungsform der Schmiervorrichtung der erfindungsgemäßen Pitcheinstellvorrichtung wird Schmierstoff zu einer Schmierstelle 10 gefördert, an der eine erste Düse 11 und eine zweite Düse 12 angeordnet sind. Die erste 11 und die zweite 12 Düse sind so angeordnet, dass der erste 8 bzw. der zweite Reibstellenbereich über die erste 11 bzw. die zweite 12 Düse in Form von einem ersten 13 bzw. einem zweiten 14 Sprühstrahl mit Schmierstoff besprüht werden.

Die erste 11 bzw. zweite 12 Düse sind dabei so ausgerichtet, dass der Schmierstoff in Richtung des ersten 8 und eines zweiten Reibstellenbereichs gesprüht wird und somit der erste 8 und der zweite Reibstellenbereich mit Schmierstoff versorgt wird.

### Bezugszeichenliste

- 1: mechanische Einrichtung
- 2: Abtriebshohlrad (als Ausschnitt)
- 3: Antriebsstirnrad
- 4: Lagerung
- 5: erste Antriebsstirnradflanke
- 6: erste Abtriebshohlradflanke
- 7: zweite Abtriebshohlradflanke
- 8: erster Reibstellenbereich
- 9: Zuleitung
- 10: Schmierstelle
- 11: erste Düse
- 12: zweite Düse
- 13: erster Sprühstrahl
- 14: zweiter Sprühstrahl
- 21 bis 34: Zähne des Antriebsstirnrades
- 41 bis 55: Zähne des Abtriebshohlrades

## Patentansprüche

1. Pitcheinstellvorrichtung für eine Windkraftanlage umfassend eine mechanische Einrichtung (1) zur Übertragung von Bewegungen, wobei
- die mechanische Einrichtung (1) zumindest zwei Übertragungsglieder, die sich bei der Übertragung von Bewegungen relativ zueinander bewegen, umfasst,
- zumindest eines der zumindest zwei Übertragungsglieder eine Zahnstange oder ein Zahnrad ist,
- die zumindest zwei Übertragungsglieder an der mechanischen Einrichtung (1) gelagert sind, wodurch durch diese Lagerung (4) eine Axialrichtung sowie ein gemeinsames Bezugssystem definiert wird,
- die Bewegungsmöglichkeiten der zumindest zwei Übertragungsglieder relativ zueinander durch die Ausgestaltung der mechanischen Einrichtung (1) bestimmt sind und
- durch die bei der Übertragung von Bewegungen relativ zueinander bewegten zumindest zwei Übertragungsglieder zumindest ein Reibstellenbereich (8) zwischen den zumindest zwei Übertragungsglieder definiert wird,
und eine Schmiervorrichtung zur automatischen Schmierung zumindest eines Bereiches der mechanischen Einrichtung (1), wobei die Schmiervorrichtung zwei Düsen (11, 12) zum Sprühen eines Schmierstoffs umfasst, die so angeordnet und ausgerichtet sind, dass zumindest ein räumlicher Abschnitt des zumindest einen Reibstellenbereichs (8) über die zwei Düsen (11, 12) mit Schmierstoff besprüht wird,
**dadurch gekennzeichnet, dass**
die Schmiervorrichtung mit den zwei Düsen (11, 12) zum kontinuierlichen Sprühen oder zum Sprühen in Form von Sprühpulsen des Schmierstoffs ausgebildet und bestimmt ist, und
die zwei Düsen (11, 12) so ausgestaltet und angeordnet sind, dass jeweils über eine erste (11) der zwei jeweils dem zumindest einem Reibstellenbereich (8) zugeordneten Düsen (11, 12) eine erste Zahnflanke (5) und über die zweite (12) der zwei jeweils dem zumindest einen Reibstellenbereich zugeordneten Düsen (11, 12) eine zweite Zahnflanke jeweils des Zahnes (21), dessen eine Zahnflanke (5) sich im Bereich des jeweils zumindest einen räumlichen Abschnitts des zumindest einen Reibstellenbereichs (8), der mit Schmierstoff besprüht wird, befindet, der zumindest einen Zahnstange oder des zumindest einen Zahnrads mit Schmierstoff besprüht wird.

2. Pitcheinstellvorrichtung nach Anspruch 1, bei der der zumindest eine Reibstellenbereich (8) im Wesentlichen ortsfest bezüglich des gemeinsamen Bezugssystems definiert ist.

3. Pitcheinstellvorrichtung nach einem der vorgehenden Ansprüche, bei der die Zahnstange und/oder das Zahnrad eine Geradverzahnung oder Schrägverzahnung oder Doppelschrägverzahnung bzw. Pfeilverzahnung oder Bogenverzahnung aufweisen.

4. Pitcheinstellvorrichtung nach einem der vorgehenden Ansprüche, bei der das Zahnrad als ein Stirnrad (3) oder ein Kegelrad ausgebildet ist.

5. Pitcheinstellvorrichtung nach einem der Ansprüche 1 bis 3, bei das Zahnrad als eine Schnecke oder ein Schneckenrad ausgebildet ist.

6. Pitcheinstellvorrichtung nach einem der vorgehenden Ansprüche, bei der zumindest zwei der zumindest zwei Übertragungsglieder der mechanischen Einrichtung (1) zur Übertragung von Bewegungen Zahnräder, insbesondere Stirnräder (3) oder Kegelräder bevorzugtermaßen mit Geradverzahnung oder Schrägverzahnung
oder Doppelschrägverzahnung bzw. Pfeilverzahnung oder Bogenverzahnung, sind.

7. Pitcheinstellvorrichtung nach Anspruch 6, bei der die zumindest zwei Zahnräder als ein Stirnschraubradpaar oder ein Schneckenradsatz ausgebildet sind.

8. Pitcheinstellvorrichtung nach Anspruch 6 oder 7, bei der zumindest eines der zumindest zwei Zahnräder ein Hohlrad (2) oder Hohlradmodul bevorzugtermaßen mit Außenverzahnung oder Innenverzahnung ist.

9. Pitcheinstellvorrichtung nach einem der vorgehenden Ansprüche, bei der der Schmierstoff feste Bestandteile und/oder zumindest ein Trennmittel und/oder ein biologisch abbaubares Trägermittel und/oder zumindest ein thixotropes Medium enthält.

10. Pitcheinstellvorrichtung nach einem der vorgehenden Ansprüche, deren Schmiervorrichtung eine Einrichtung zur Beigemengung von Luft zum Schmierstoff vor dem Sprühen umfasst.

11. Pitcheinstellvorrichtung nach einem der vorgehenden Ansprüche, deren Schmiervorrichtung eine Sprühleistung und/oder Dichten der Sprühpulse und/oder Dauern der Sprühpulse aufweist, die ausreichend groß ausgelegt ist bzw. sind, damit der zumindest eine räumliche Abschnitt des zumindest einen Reibstellenbereichs (8), der über die zwei Düsen (11, 12) mit Schmierstoff besprüht wird, mit einem durchgehenden Schmierfilm besprüht wird bzw. besprüht werden kann.

12. Pitcheinstellvorrichtung nach einem der vorgehenden Ansprüche, deren Schmiervorrichtung zum Sprühen des Schmierstoffs in Form von Sprühpulsen ausgelegt ist, wobei die Dichte bzw. die Dichten
und/oder die Dauer bzw. Dauern zumindest einzelner Sprühpulse einstellbar ist bzw. sind.

13. Pitcheinstellvorrichtung nach einem der vorgehenden Ansprüche, deren Schmiervorrichtung zum Sprühen des Schmierstoffs in Form von Sprühpulsen ausgelegt ist, wobei die Dauer bzw. Dauern zumindest einzelner Zeitspannen, die zwischen aufeinanderfolgenden Sprühpulsen liegen, einstellbar ist bzw. sind.

14. Pitcheinstellvorrichtung nach einem der vorgehenden Ansprüche, deren Schmiervorrichtung eine Sprühleistung und/oder Dichten der Sprühpulse und/oder Dauern der Sprühpulse aufweist, die abhängig von der Anzahl der Durchgänge zumindest einer definierten Stelle zumindest eines der zumindest zwei Übertragungsglieder vorbei an einer definierten Stelle des gemeinsamen Bezugssystems der mechanischen Einrichtung (1) eingestellt wird bzw. werden.

15. Pitcheinstellvorrichtung nach einem der Ansprüche 1 bis 14, deren Schmiervorrichtung eine Sprühleistung und/oder Dichten der Sprühpulse und/oder Dauern der Sprühpulse aufweist, die zumindest abhängig von der Anzahl der Durchgänge pro Zeiteinheit zumindest einer definierten Stelle zumindest eines der zumindest zwei Übertragungsglieder vorbei an einer definierten Stelle des gemeinsamen Bezugssystems der mechanischen Einrichtung (1) eingestellt wird bzw. werden.

16. Pitcheinstellvorrichtung nach einem der vorgehenden Ansprüche, deren Schmiervorrichtung eine Sprühleistung und/oder Dichten der Sprühpulse und/oder Dauern der Sprühpulse aufweist, die abhängig von der Gesamtwegstrecke, die zumindest eine definierte Stelle zumindest eines der zumindest zwei Übertragungsglieder in Bezug auf eine definierte Stelle des gemeinsamen Bezugssystems der mechanischen Einrichtung (1) zurückgelegt, eingestellt wird bzw. werden.

17. Pitcheinstellvorrichtung nach einem der vorgehenden Ansprüche, deren Schmiervorrichtung zusätzlich eine Tasterauslösung für das Sprühen des Schmierstoffs aufweist.

18. Pitcheinstellvorrichtung nach einem der vorgehenden Ansprüche, bei der die zwei Düsen (11, 12) um zumindest einen Winkelbereich bzgl. des gemeinsamen Bezugssystems verschwenkbar ist bzw. sind.

19. Pitcheinstellvorrichtung nach Anspruch 18, bei der der zumindest eine Winkelbereich, um den die zwei Düsen (11, 12) bzgl. des gemeinsamen Bezugssystems verschwenkbar ist, einstellbar ist.

20. Pitcheinstellvorrichtung nach Anspruch 18 oder 19, bei der die zwei Düsen (11, 12) zeitlich in vorgegebenen oder einstellbaren zeitlichen Perioden oder impulsgesteuert verschwenkt wird bzw. werden oder verschwenkt werden kann bzw. können.

21. Pitcheinstellvorrichtung nach einem der vorgehenden Ansprüche, bei der die mechanische Einrichtung (1) ein Hohlrad (2) oder Hohlradmodul mit Innenverzahnung und ein Zahnrad, insbesondere ein Antriebszahnrad, das in das Hohlrad oder Hohlradmodul mit Innenverzahnung, als insbesondere Abtriebsglied, eingreift, umfasst.

22. Pitcheinstellvorrichtung nach einem der vorgehenden Ansprüche, bei der der Schmierstoff unter Verwendung von Druckluft an die zwei Düsen (11, 12) angefördert wird.

23. Pitcheinstellvorrichtung nach einem der vorgehenden Ansprüche, bei der den zwei Düsen (11, 12) Druckluft zugeführt wird, so dass der Schmierstoff in zumindest einem Druckluftstrahl aus den zumindest zwei Düsen (11, 12) gesprüht wird.

24. Pitcheinstellvorrichtung nach Anspruch 23, bei der der Schmierstoff durch die Druckluft mitgerissen wird.

25. Pitcheinstellvorrichtung nach einem der vorgehenden Ansprüche, mittels der jeweils der Pitchwinkel aller Flügel der Windkraftanlage eingestellt wird.

26. Pitcheinstellvorrichtung nach Anspruch 25, bei der der Schmiervorrichtung eine Druckluftquelle zugeordnet ist, wobei die Schmiervorrichtung unterschiedlichen Flügeln zugeordnet ist.

27. Pitcheinstellvorrichtung nach einem der Ansprüche 1 bis 25, mittels der der Pitchwinkel genau eines Flügels einer Windkraftanlage, die mehr als einen Flügel umfasst, eingestellt wird.

28. Pitcheinstellvorrichtung nach Anspruch 27, bei der der einem Flügel zugeordneten Schmiervorrichtung genau eine Druckluftquelle zugeordnet ist.

29. Pitcheinstellvorrichtung nach Anspruch 26 oder 27, bei der der Schmiervorrichtung eine Pumpe zur Förderung des Schmierstoffs zugeordnet ist, wobei die Pumpe Schmierstoff an Düsen (11, 12) liefert, die unterschiedlichen Flügeln zugeordnet sind.

30. Pitcheinstellvorrichtung nach Anspruch 28 oder 29, bei der der einem Flügel zugeordneten Schmiervorrichtung genau eine Pumpe zur Förderung des Schmierstoffs zugeordnet ist.

31. Pitcheinstellvorrichtung nach Anspruch 29 oder 30, bei der die Pumpe oder die Pumpen mit Druckluft versorgt wird bzw. werden.

32. Pitcheinstellvorrichtung nach Anspruch 31, bei der eine Pumpe jeweils zumindest einen Druckluftanschluss aufweist.

33. Pitcheinstellvorrichtung nach einem der Ansprüche 31 oder 32, bei der eine Pumpe jeweils mittels Druckluft gesteuert wird.

## Claims

1. A pitch control device for a wind turbine comprising a mechanical means (1) for transmitting motion, wherein
- the mechanical means (1) comprises at least two transmitting members which move relative to each other when transmitting motion,
- at least one of the at least two transmitting members is a rack or a pinion,
- the at least two transmitting members are supported on the mechanical means (1) whereby an axial direction as well as a common reference system are defined by said bearing (4),
- the motion capabilities of the at least two transmitting members relative to each other are determined by the configuration of the mechanical means (1), and
- due to the at least two transmitting members being moved relative to each other when motion is transmitted, at least one friction point area (8) is defined between the at least two transmitting members,
and a lubricating device for automatically lubricating at least one area of the mechanical means (1),
wherein the lubricating device comprises two nozzles (11, 12) for spraying a lubricant which are arranged and oriented such that at least one spatial section of the at least one lubricating point area (8) is sprayed with lubricant through the two nozzles (11, 12),
**characterized in that**
the lubricating means including the two nozzles (11, 12) is configured and defined to spray the lubricant continuously or as spray pulses, and
the two nozzles (11, 12) are configured and arranged such that the at least one rack or the at least one pinion is sprayed with lubricant at a respective first flank (5) by a first (11) of the two nozzles (11, 12) respectively associated with the at least one friction point area (8) and at a respective second flank of a respective tooth (21) by a second (12) of the two nozzles (11, 12) respectively associated with the at least one friction point area (8), the flank (5) of which is situated in the area of the respective at least one spatial section of the at least one friction point area (8) to be sprayed with lubricant.

2. The pitch control device according to claim 1, wherein the at least one friction point area (8) is essentially defined to be stationary relative to the common reference system.

3. The pitch control device according to any one of the preceding claims, wherein the rack and/or the pinion have/has a spur gearing or a helical gearing or double helical gearing, respectively a herringbone gearing or spiral gearing.

4. The pitch control device according to any one of the preceding claims, wherein the pinion is configured as a spur gear (3) or a bevel gear.

5. The pitch control device according to any one of claims 1 to 3, wherein the pinion is configured as a worm or a worm gear.

6. The pitch control device according to any one of the preceding claims, wherein at least two of the at least two transmitting members of the mechanical means (1) for transmitting motion are pinions, optionally spur gears (3) or bevel gears preferably having a spur gearing or a helical gearing or double helical gearing, respectively a herringbone gearing or spiral gearing.

7. The pitch control device according to claim 6, wherein the at least two pinions are configured as a crossed helical gear pair or a worm gear set.

8. The pitch control device according to claim 6 or 7, wherein at least one of the at least two pinions is a ring gear (2) or a ring gear module preferably having external teeth or internal teeth.

9. The pitch control device according to any one of the preceding claims, wherein the lubricant contains solid components and/or at least one separating agent and/or a biodegradable carrier and/or at least one thixotropic medium.

10. The pitch control device according to any one of the preceding claims, the lubricating means of which comprises a means for admixing air to the lubricant prior to spraying.

11. The pitch control device according to any one of the preceding claims, the lubricating means of which has a spraying capacity and/or spray pulse density and/or spray pulse duration adapted to be sufficient enough to spray or be able to spray the at least one spatial section of the at least one friction point area (8) to be sprayed with lubricant through the two nozzles (11, 12) in a continuous lubricant film.

12. The pitch control device according to any one of the preceding claims, the lubricating means of which is adapted to spray the lubricant in the form of spray pulses, wherein the density or densities and/or duration or durations of at least individual spray pulses is/are adjustable.

13. The pitch control device according to any one of the preceding claims, the lubricating means of which is adapted to spray the lubricant in the form of spray pulses, wherein the duration or durations of at least individual periods of time between successive spray pulses is/are adjustable.

14. The pitch control device according to any one of the preceding claims, the lubricating means of which has a spraying capacity and/or spray pulse density and/or spray pulse duration which is/are to be adjusted as a function of the number of passes of at least one defined point of at least one of the at least two transmitting members past a defined point of the common reference system of the mechanical means (1).

15. The pitch control device according to any one of the preceding claims, the lubricating means of which has a spraying capacity and/or spray pulse density and/or spray pulse duration which is/are to be adjusted at least as a function of the numbers of passes of at least one defined point of at least one of the at least two transmitting members past a defined point of the common reference system of the mechanical means (1) per unit of time.

16. The pitch control device according to any one of the preceding claims, the lubricating means of which has a spraying capacity and/or spray pulse density and/or spray pulse duration which is/are to be adjusted as a function of the total distance covered by at least one defined point of at least one of the at least two transmitting members relative a defined point of the common reference system of the mechanical means (1).

17. The pitch control device according to any one of the preceding claims, the lubricating means of which additionally has a sensor triggering means for spraying the lubricant.

18. The pitch control device according to any one of the preceding claims, wherein the two nozzles (11, 12) are pivotable about at least one angular range with respect to the common reference system.

19. The pitch control device according to claim 18, wherein the at least one angular range about which the two nozzles (11, 12) are pivotable with respect to the common reference system is adjustable.

20. The pitch control device according to claim 18 or 19, wherein the two nozzles (11, 12) are pivoted or can be pivoted or pulse-controlled temporally in predetermined or adjustable time periods.

21. The pitch control device according to any one of the preceding claims, wherein the mechanical means (1) comprises a ring gear (2) or ring gear module having internal teeth, and a pinion, optionally a driving pinion engaging in the ring gear or ring gear module having internal teeth, optionally as a driving member.

22. The pitch control device according to any one of the preceding claims, wherein the lubricant is conveyed to the two nozzles (11, 12) using pressurized air.

23. The pitch control device according to any one of the preceding claims, wherein the two nozzles (11, 12) are supplied with pressurized air so that lubricant is sprayed from the at least two nozzles (11, 12) in at least one jet of pressurized air.

24. The pitch control device according claim 23, wherein the lubricant is entrained by the pressurized air.

25. The pitch control device according to any one of the preceding claims, by means of which each pitch angle of all the blades of the wind turbine is adjusted.

26. The pitch control device according to claim 25, wherein a source of pressurized air is associated with the lubricating device, the lubricating device being associated with different blades.

27. The pitch control device according to any one of claims 1 to 25, by means of which the pitch angle of exactly one blade of the wind turbine comprising more than one blade is adjusted.

28. The pitch control device according to claim 27, wherein the lubricating device associated with one blade has exactly one associated source of pressurized air.

29. The pitch control device according to claim 26 or 27, wherein a pump for conveying lubricant is associated with the lubricating device, the pump supplying lubricant to nozzles (11, 12) associated with different blades.

30. The pitch control device according to claim 28 or 29, wherein the lubricating device associated with one blade has exactly one associated pump for conveying lubricant.

31. The pitch control device according to claim 29 or 30, wherein the pump or pumps is/are supplied with pressurized air.

32. The pitch control device according to claim 31, wherein one pump has in each case at least one pressurized air connection.

33. The pitch control device according to any one of claims 31 or 32, wherein one pump is respectively controlled by pressurized air.

## Revendications

1. Dispositif de réglage de pas pour une éolienne, comprenant un dispositif mécanique (1) pour la transmission de mouvements, où
- le dispositif mécanique (1) comprend au moins deux éléments de transmission qui se meuvent l'un par rapport à l'autre lors de la transmission de mouvements,
- au moins l'un des au moins deux éléments de transmission est une crémaillère ou une roue dentée,
- les au moins deux éléments de transmission sont logés au niveau du dispositif mécanique (1), ce par quoi un sens axial ainsi qu'un système de référence commun sont définis par ce logement (4),
- les possibilités de mouvement des au moins deux éléments de transmission l'un par rapport à l'autre sont déterminés par la configuration du dispositif mécanique (1) et
- du fait des au moins deux éléments de transmission mus l'un par rapport à l'autre lors de la transmission de mouvements, au moins une zone de point de friction (8) est définie entre les au moins deux éléments de transmission,
et un dispositif de lubrification pour la lubrification automatique d'au moins une zone du dispositif mécanique (1),
le dispositif de lubrification comprenant deux tuyères (11, 12) pour l'aspersion d'un lubrifiant, les tuyères étant disposées et orientées de façon qu'au moins une portion spatiale de l'au moins une zone de point de friction (8) soit aspergée de lubrifiant via les deux tuyères (11, 12),
**caractérisé en ce que**
le dispositif de lubrification pourvu des deux tuyères (11, 12) est configuré pour et destiné à l'aspersion continue ou l'aspersion sous forme d'impulsions d'aspersion du lubrifiant, et
les deux tuyères (11, 12) sont configurées et disposées de façon qu'un premier flanc de dent (5) et un deuxième flanc de dent de respectivement la dent (21) de l'au moins une crémaillère ou de l'au moins une roue dentée, dont un flanc de dent (5) se trouve dans la zone de respectivement l'au moins une portion spatiale de l'au moins une zone de point de friction (8) qui est aspergée de lubrifiant, soient aspergés de lubrifiant respectivement via une première (11) des deux tuyères (11, 12) respectivement affectées à l'au moins une zone de point de friction (8) et via la deuxième (12) des deux tuyères (11, 12) respectivement affectées à l'au moins une zone de point de friction (8).

2. Dispositif de réglage de pas selon la revendication 1, où l'au moins une zone de point de friction (8) est définie de manière sensiblement fixe par rapport au système de référence commun.

3. Dispositif de réglage de pas selon l'une des revendications précédentes, où la crémaillère et/ou la roue dentée présente(nt) une denture droite ou denture hélicoïdale ou denture hélicoïdale double / denture en chevrons ou denture en spirale.

4. Dispositif de réglage de pas selon l'une des revendications précédentes, où la roue dentée est conçue comme roue droite (3) ou roue conique.

5. Dispositif de réglage de pas selon l'une des revendications 1 à 3, où la roue dentée est conçue comme vis sans fin ou roue à vis sans fin.

6. Dispositif de réglage de pas selon l'une des revendications précédentes, où au moins deux des au moins deux éléments de transmission du dispositif mécanique (1) pour la transmission de mouvements sont des roues dentées, en particulier des roues droites (3) ou des roues coniques de préférence à denture droite ou denture hélicoïdale ou denture hélicoïdale double / denture en chevrons ou denture en spirale.

7. Dispositif de réglage de pas selon la revendication 6, où les au moins deux roues dentées sont conçues comme engrenage de roues droites ou comme ensemble roue - vis sans fin.

8. Dispositif de réglage de pas selon la revendication 6 ou 7, où au moins l'une des au moins deux roues dentées est une couronne (2) ou un module de couronne de préférence à denture extérieure ou denture intérieure.

9. Dispositif de réglage de pas selon l'une des revendications précédentes, où le lubrifiant contient des éléments solides et/ou au moins un agent séparateur et/ou un support biodégradable et/ou au moins un fluide thixotrope.

10. Dispositif de réglage de pas selon l'une des revendications précédentes, dont le dispositif de lubrification comprend un dispositif pour l'adjonction d'air au lubrifiant avant l'aspersion.

11. Dispositif de réglage de pas selon l'une des revendications précédentes, dont le dispositif de lubrification présente une capacité d'aspersion et/ou des densités d'impulsions d'aspersion et/ou des durées d'impulsions d'aspersion qui est / sont conçue(s) de façon suffisamment grande pour que l'au moins une portion spatiale de l'au moins une zone de point de friction (8) qui est aspergée de lubrifiant par les deux tuyères (11, 12) soit aspergée ou puisse être aspergée d'un film de lubrification continu.

12. Dispositif de réglage de pas selon l'une des revendications précédentes, dont le dispositif de lubrification est conçu pour l'aspersion du lubrifiant sous forme d'impulsions d'aspersion, la densité / les densités et/ou la durée / les durées d'au moins certaines impulsions d'aspersion étant réglable(s).

13. Dispositif de réglage de pas selon l'une des revendications précédentes, dont le dispositif de lubrification est conçu pour l'aspersion du lubrifiant sous forme d'impulsions d'aspersion, la durée / les durées d'au moins certains laps de temps compris entre des impulsions d'aspersion consécutives est / sont réglable(s).

14. Dispositif de réglage de pas selon l'une des revendications précédentes, dont le dispositif de lubrification présente une capacité d'aspersion et/ou des densités d'impulsions d'aspersion et/ou des durées d'impulsions d'aspersion qui se règle(nt) en fonction du nombre de passages d'au moins un point défini d'au moins l'un des au moins deux éléments de transmission devant un point défini du système de référence commun du dispositif mécanique (1).

15. Dispositif de réglage de pas selon l'une des revendications 1 à 14, dont le dispositif de lubrification présente une capacité d'aspersion et/ou des densités d'impulsions d'aspersion et/ou des durées d'impulsions d'aspersion qui se règle(nt) au moins en fonction du nombre de passages par unité de temps d'au moins un point défini d'au moins l'un des au moins deux éléments de transmission devant un point défini du système de référence commun du dispositif mécanique (1).

16. Dispositif de réglage de pas selon l'une des revendications précédentes, dont le dispositif de lubrification présente une capacité d'aspersion et/ou des densités d'impulsions d'aspersion et/ou des durées d'impulsions d'aspersion qui se règle(nt) en fonction de la course totale que parcourt au moins un point défini d'au moins l'un des au moins deux éléments de transmission par rapport à un point défini du système de référence commun du dispositif mécanique (1).

17. Dispositif de réglage de pas selon l'une des revendications précédentes, dont le dispositif de lubrification présente en outre un déclenchement à bouton pour l'aspersion du lubrifiant.

18. Dispositif de réglage de pas selon l'une des revendications précédentes, où les deux tuyères (11, 12) sont basculables d'au moins une plage angulaire par rapport au système de référence commun.

19. Dispositif de réglage de pas selon la revendication 18, où l'au moins une plage angulaire de laquelle les deux tuyères (11, 12) sont basculables par rapport au système de référence commun, est réglable.

20. Dispositif de réglage de pas selon la revendication 18 ou 19, où les deux tuyères (11, 12) sont basculées ou peuvent être basculées dans le temps selon des périodes de temps prédéfinies ou réglables ou selon une commande par impulsions.

21. Dispositif de réglage de pas selon l'une des revendications précédentes, où le dispositif mécanique (1) comprend une couronne (2) ou un module de couronne à denture intérieure et une roue dentée, en particulier une roue dentée menante, qui s'engrène dans la couronne ou le module de couronne à denture intérieure étant en particulier un élément mené.

22. Dispositif de réglage de pas selon l'une des revendications précédentes, où le lubrifiant est acheminé aux deux tuyères (11, 12) moyennant de l'air comprimé.

23. Dispositif de réglage de pas selon l'une des revendications précédentes, où de l'air comprimé est amené aux deux tuyères (11, 12) de façon que le lubrifiant soit aspergé en au moins un jet d'air comprimé sortant des au moins deux tuyères (11, 12).

24. Dispositif de réglage de pas selon la revendication 23, où le lubrifiant est entraîné par l'air comprimé.

25. Dispositif de réglage de pas selon l'une des revendications précédentes, au moyen duquel se règle respectivement l'angle de pas de toutes les pales de l'éolienne.

26. Dispositif de réglage de pas selon la revendication 25, où une source d'air comprimé est affectée au dispositif de lubrification, le dispositif de lubrification étant affecté à différentes pales.

27. Dispositif de réglage de pas selon l'une des revendications 1 à 25, au moyen duquel se règle l'angle de pas d'exactement une pale d'une éolienne comportant plus d'une pale.

28. Dispositif de réglage de pas selon la revendication 27, où exactement une source d'air comprimé est affectée au dispositif de lubrification affecté à une pale.

29. Dispositif de réglage de pas selon la revendication 26 ou 27, où une pompe est affectée au dispositif de lubrification pour le refoulement du lubrifiant, la pompe fournissant du lubrifiant à des tuyères (11, 12) qui sont affectées à différentes pales.

30. Dispositif de réglage de pas selon la revendication 28 ou 29, où exactement une pompe est affectée au dispositif de lubrification affecté à une pale pour le refoulement du lubrifiant.

31. Dispositif de réglage de pas selon la revendication 29 ou 30, où la pompe ou les pompes est / sont alimentée(s) en air comprimé.

32. Dispositif de réglage de pas selon la revendication 31, où une pompe présente respectivement au moins un raccord d'air comprimé.

33. Dispositif de réglage de pas selon l'une des revendications 31 ou 32, où une pompe est commandée respectivement au moyen d'air comprimé.
